# EUROPEAN PATENT APPLICATION

(11) **EP 1 449 721 A2**
(43) Date of publication of application: **25.08.2004**
(21) Application number: 04250130.4
(22) Date of filing: 13.01.2004
(51) Int. Cl.: B60R 1/08, B60R 1/12

(54) **Outer mirror**

(30) Priority: 20.02.2003 JP 2003042765
(71) Applicant: Murakami Corporation, Shizuoka-shi, Shizuoka, 422-8569 (JP)
(72) Inventor: Oishi, Akiyoshi, c/o Murakami Corporation, Fujieda-shi, Shizuoka (JP); Umeki, Kazuyoshi, c/o Murakami Corporation, Fujieda-shi, Shizuoka (JP); Nagashima, Yoshiaki, c/o Murakami Corporation, Fujieda-shi, Shizuoka (JP)
(74) Representative: Sutcliffe, Nicholas Robert

(57) **Abstract**

An outer mirror includes a mirror base (10) laterally extending from a side surface of a vehicle body, a mirror housing (20) having an opening (20a) and attached to the mirror base, a mirror member (31) arranged in the opening of the mirror housing with its mirror surface (31a) tiltable relative to the mirror housing, and a plate member (40) which is translucent and which covers the opening of the mirror housing at a rear side of the mirror member.

## Description

The present invention relates to an outer mirror attached to a vehicle, and more particularly to an outer mirror which can decrease vibrations occurring during drive of a vehicle.

Conventionally known outer mirrors consist of, for example, a mirror base laterally extending from a side surface of a vehicle body, a mirror housing supported by the mirror base, and a mirror member tiltably supported by the mirror housing. In the following descriptions, terms referred to as "forward/rearward", "rightward/leftward", and "upward/downward" are determined based on a pair of outer mirrors attached to a vehicle body.

In order to secure rear view visibility, the above types of outer mirrors are fixed to the side surface of the vehicle body in a manner laterally extending from the vehicle body, which generally causes a separation of air current at the rear-side of the mirror housing during driving of the vehicle. Especially, during high speed driving, this may cause alternate and regular Karman's vortex streets at the right and left ends of and just behind the mirror member. Such Karman's vortices press (tap)right and left ends of the mirror surface intermittently and alternately toward the forward direction (traveling direction). This causes vibrations of the mirror member and disadvantageously decreases visibility in it.

As shown in FIG. 8, Japanese Laid-open Patent Application No.10-226276 (in particular Paragraph Numbers: 0008-0015, and FIGS. 1-4) discloses a conventional outer mirror having bead-like protrusions which extend from the mirror housing to prevent vibrations of the mirror member caused by Karman's vortices. In this outer mirror, the mirror housing 70 is provided with bead-like protrusions 72 extending longitudinally at the side surface 71 thereof.

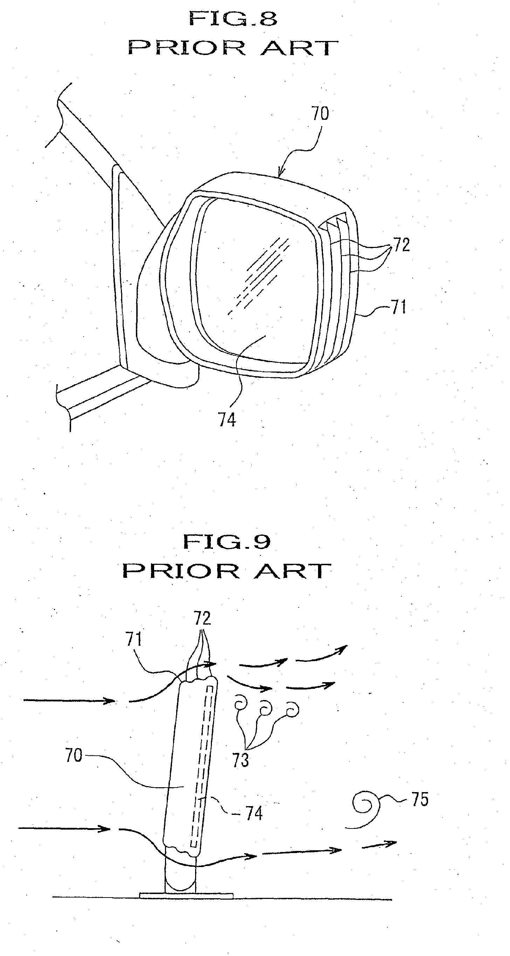

According to this outer mirror, as seen in FIG. 9, turbulence occurs at the outer side of the mirror housing 70 by the protrusions 72 formed on the side surface 71 during driving of the vehicle. This can decrease the size of vortices 73 occurring behind the side surface 71 of the mirror housing 70. A Vortex occurring on the other side of the side surface 71 flows rearward with the vortexes 73. Therefore, it is possible to prevent the occurrence of vortices that press (tap) both right and left ends of the mirror member 74 intermittently and alternately toward the forward direction (travelling direction), and vibrations of the mirror member 74 can be decreased accordingly.

Other types of conventional outer mirrors which can directly decrease vibrations of the mirror member have been proposed, for example, by Japanese Laid-open Patent Application No.7-304391 (Paragraph Numbers: 0017-0020, and FIGS. 5-7). As shown in FIG. 10, such an outer mirror is provided with a gyroscope 83 at the front part 82a of the mirror member 82 that is tiltably supported in the mirror housing 80 through an actuator 81.

This type of outer mirror can prevent vibrations of the mirror member 82 by driving the gyroscope 83.

However, the first type of outer mirror above has a drawback in that the design of the mirror housing 70 is restricted because of the protrusions 72 provided on the side surface 71 of the mirror housing 70.

The second type of outer mirror above has a drawback in that the number of construction parts increases so that the structure thereof becomes complicated and the manufacturing cost increases. This is because the gyroscope 83 requires a balancer, a motor, etc. as the construction parts.

Accordingly, the present invention preferably seeks to provide an outer mirror, which can improve the degree of design freedom of the mirror housing, and which can prevent vibrations of the mirror member that occurs during driving of the vehicle due to generated wind pressing (tapping) the mirror surface, without significantly increasing the number of parts and cost.

According to the present invention, an outer mirror includes a mirror base laterally extending from a side surface of a vehicle body, a mirror housing having an opening and attached to the mirror base, a mirror member arranged in the opening of the mirror housing with its mirror surface tiltable relative to the mirror housing, and a plate member which is translucent (e.g. transparent) and which covers the opening of the mirror housing at a rear side of the mirror member.

With this construction of the outer mirror, the opening of the mirror housing, in which the mirror surface of the mirror member is tiltably supported, is covered by the plate member which is translucent, so that the mirror member is protected by the plate member and wind that is generated upon driving the vehicle and is flowing around from the mirror housing toward the mirror surface does not reach the mirror surface. Therefore, it is possible to completely prevent the generated wind from pressing (tapping) the mirror surface. Because unlike the conventional outer mirror the outer mirror does not require bead-like protrusions, the degree of design freedom of the mirror housing can be significantly improved. Further, with a simple structure such that the plate member covers the opening of the mirror housing, the outer mirror can prevent vibrations of the mirror member due to generated wind. This can advantageously realize an outer mirror which is simple in structure with decreased number of construction parts and which can save cost.

Because the plate member has translucency, even if the opening of the mirror housing is closed by the plate member, visibility of the mirror member does not deteriorate. Further, the mirror member is protected by the plate member so that rainwater, etc. does not directly hit the mirror surface, thereby preventing the mirror member from being soiled. This can permanently retain good visibility of the mirror member.

Further, because the plate member closes the opening of the mirror housing, the plate member may also function as a reinforcement member at the opening. This can lead to an improvement in rigidity of the mirror housing.

The plate member of the aforementioned outer mirror may be made of plastic material. Therefore, it is possible to provide an outer mirror which is light-weight and has sufficient strength and which can prevent vibrations of the mirror member in a cheap manner. Preferably, the plate member is formed, for example, by a thin acrylic plate with a desired strength, which has a smooth surface and excellent light transmissible characteristics and which is unlikely to be deformed by generated wind.

The plate member of the aforementioned outer mirrors may be provided with an electrochromic layer including an electrochromic element for changing light transmittance.

With this construction of the outer mirror, the light transmittance of the plate member can be changed (decreased) by energizing the electrochromic element to change the coloring amount of the electrochromic element. This can ease or prevent glare or dazzle caused by another vehicle's lights during night time driving and the like.

The plate member of the aforementioned outer mirrors may be provided with information displaying means.

With this construction of the outer mirror, taking into consideration of a structural characteristic in that the outer mirror laterally extends from the vehicle body, various pieces of information such as right-turn or left-turn signals can be displayed for notifying pedestrians and following vehicles, or useful vehicle information, such as speed etc. can be displayed for the driver.

The plate member of the aforementioned outer mirror may be provided with a heater for preventing or reducing dew condensation.

With this construction of the outer mirror, the plate member can be heated by energizing the dew condensation prevention/reduction heater, so as to reduce, prevent or remove fog or dew condensation on the plate member.

Preferred embodiments of the present invention will be described below, by way of example only, with reference to the accompanying drawings, in which:
FIG. 1A shows an outer mirror according to a first embodiment of the present invention viewed from the rear side, and FIG. 1B is a sectional view and taken along the line A-A of FIG. 1A;
FIG. 2 is an enlarged view partly showing the front side of the mirror housing shown in FIG. 1B;
FIG. 3 is a block diagram explaining a circuit for controlling an electrochromic element of an electrochromic layer;
FIG. 4A through 4C are graphs showing relations between time and vibration acceleration, in which FIG. 4A is a graph showing the relation in the (normal) state where the plate member is not attached to the mirror housing, FIG. 48 is a graph showing the relation in the state where the opening is closed by the plate member, and FIG. 4C is a graph obtained by superposing respective values of FIGS. 4A and 4B;
FIG. 5A shows an outer mirror according to a second embodiment of the present invention viewed from the rear side, and FIG. 5B is a sectional view and taken along the line A-A of FIG. 5A;
FIG. 6 is a sectional view showing a third embodiment of the present invention;
FIG. 7 is a partially enlarged sectional view illustrating another arrangement of the heater;
FIG. 8 is a perspective view illustrating a conventional outer mirror;
FIG. 9 is a view explaining influences exerted to the conventional outer mirror shown in FIG. 8; and

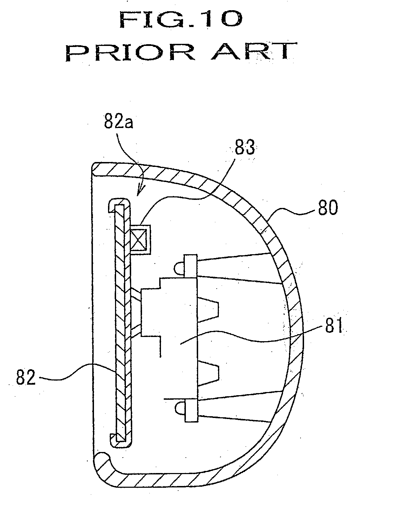

FIG. 10 is a longitudinal sectional view of another conventional outer mirror.

Preferred embodiments of the outer mirrors according to the present invention will be described with reference to the accompanying drawings. Herein, like reference characters designate corresponding parts and detailed description thereof will be omitted.

### FIRST EMBODIMENT

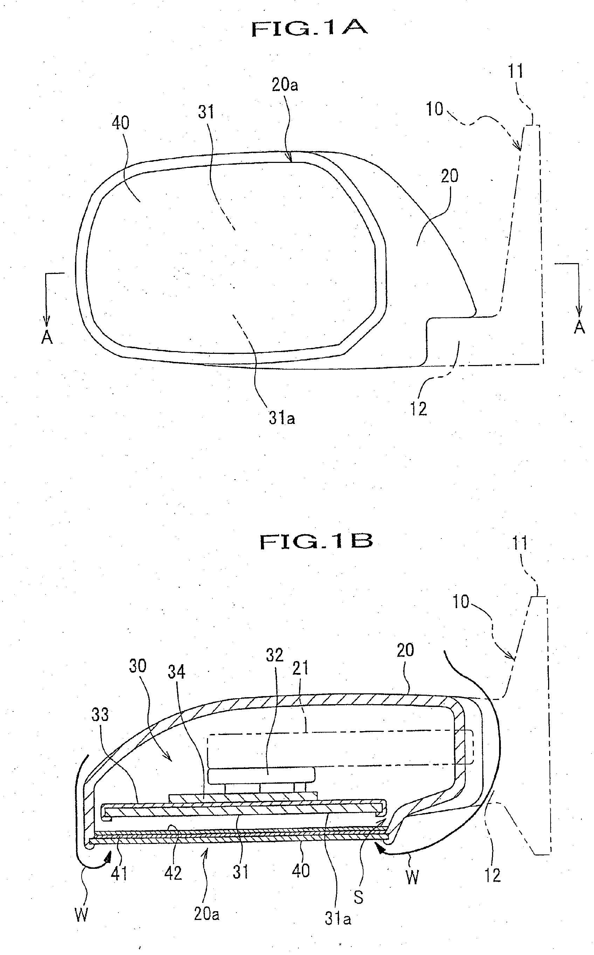

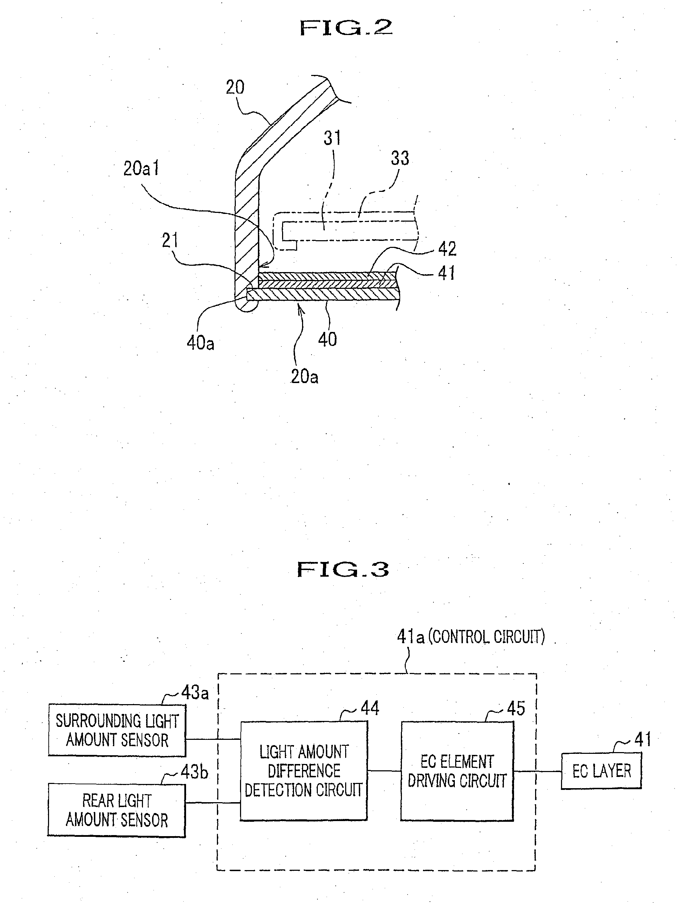

As shown in FIGS. 1A and 1B and FIG. 2, an outer mirror according to this embodiment is a so-called door mirror which is fixed to an adjacent part of a side door (not shown) of a vehicle body. The outer mirror consists of a mirror base 10, a mirror housing 20 attached to the mirror base 10 and rotatable in the horizontal direction, and a mirror member 31 for viewing the rear attached to an opening 20a of the mirror housing 20 with its mirror surface 31a facing the rear side. A plate member 40 closes the opening 20a of the mirror housing 20 at the rear of the mirror member 31. Therefore, the mirror member 31 is covered by the plate member 40 and so not exposed to the opening 20a.

The outer mirror according to this embodiment is an electrically retractable type mirror, and the mirror housing 20 is rotatable relative to a shaft (not shown) provided on the upper surface of the mirror base 10.

The mirror base 10 is made of synthetic resin. The mirror base 10 consists of a mount plate 11 for fixing to the mount seat (not shown) that is provided at the front end part of the side door of the vehicle, and an extension part 12 laterally extending from a lower part of the mount plate11. In this preferred embodiment, the mount plate 11 and the extension part 12 are integral to each other.

The mirror housing 20 is made of synthetic resin. The mirror housing 20 is supported by a frame 21 (FIG. 1B) attached to the shaft (not shown) of the mirror base 10. A mirror assembly 30 is attached at the rear surface of the frame 21.

The mirror assembly 30 consists of the mirror member 31, and an actuator 32 for adjusting the angle of the mirror surface 31a of the mirror member 31.

The mirror member 31 is fixed to a holder 33 by adhesive, etc. The mirror member 31 is fixed to the actuator 32 through the mount portion 34 provided at the front part of the holder 33.

Although not shown, the actuator 32 includes a motor for adjusting the angle of the mirror member 31 in the upward/downward direction and a motor for adjusting the angle of the mirror member 31 in the rightward/leftward direction, so that the mirror surface 31a of the mirror member 31 can be adjusted by controlling the rotating directions of these motors. Space S is provided between the mirror housing 20 and the mirror member 31 for reliably tilting the mirror member 31. Wire harness (not shown) extends through the shaft and is arranged in the mirror housing 20 so as to supply electric power to the actuator 32.

As shown in FIG. 1B and FIG. 2, the plate member 40 is a transparent plastic plate having a smooth surface. To be more specific, the plate member 40 is formed by an acrylic plate which has excellent light transmitting characteristics and which is thin but sufficient in strength so as not to easily be deformed by generated wind. The plate member 40 may be made of glass which contains glass and acryl or other synthetic resins.

As shown in FIG. 2, the plate member 40 is fixed to the opening 20a of the mirror housing 20 with its peripheral portion 40a tightly fitted in the groove 21 that is formed around the inner peripheral wall 20a1 of the mirror housing 20. The plate member 40 may be fitted in the groove 21 through a packing, etc. so as to improve adhesiveness and damp proofing between the groove 21 and the plate member 40.

The plate member 40 is provided with an electrochromic (EC) layer 41 consisting of an electrochromic (EC) element for changing light transmittance. The EC layer 41 is formed at the front side of the plate member 40 (opposite surface of the mirror member 31) in a manner sandwiched between the substrate plate 42 and the plate member 40.

As shown in FIG. 3, the EC element of the EC layer 41 is controlled by a control circuit 41a which includes a light amount difference detection circuit 44 and EC element driving circuit 45. The light amount difference detection circuit 44 detects the difference between the light amounts obtained by a surrounding light amount sensor 43a for detecting surrounding light amount around the vehicle body and a rear light amount sensor 43b for detecting rearward light amount of the vehicle body, respectively, and in accordance with the light amount difference it outputs a signal to the EC element driving circuit 45. In this instance, several kinds of signals are previously set in accordance with light amount difference. The EC element driving circuit 45 drives the EC element of the EC layer 41 based on the output signal from the light amount difference detection circuit 44.

For example, the light amount difference detection circuit 44 outputs a signal to the EC element driving circuit 45 such that the colouring amount of the EC element increases as the increase in the rearward light amount becomes greater with respect to the surrounding light amount, thereby changing (decreasing) the light transmittance of the EC layer 41. Therefore, glare or dazzle of the plate member 40 can be reduced or prevented.

The surrounding light amount sensor 43a and the rear light amount sensor 43b are formed by a photodiode or CdS, and they can be arranged in the mirror housing 20 or its periphery, or at the adjacent position of the interior rear view mirror (not shown).

The EC layer 41 is connected to the wire harness (not shown).

Known antireflection film may be provided on the front surface or the rear surface of the plate member 40. With the provision of the antireflection film on the plate member 40, good visibility of the outer mirror can be obtained.

According to the above outer mirror, because the plate member 40 with light transmitting characteristics closes the opening 20a of the mirror housing 20 at the rear of the mirror member 31, the following advantages can be achieved.

As shown in the solid line of FIG. 1B, wind W that is generated upon driving the vehicle and flows around from the mirror housing 20 toward the mirror surface 31a of the mirror member 31 is shut out by the plate member 40 and can not reach the mirror surface 31a. Therefore, unlike the conventional outer mirror, it is possible to prevent the generated wind W from directly pressing (tapping) the mirror surface 31a of the mirror member 31. Therefore, with simple structure of the outer mirror, vibrations of the mirror member 31 due to generated wind W can be effectively prevented, and because unlike the conventional outer mirror it is not necessary to provide bead-like protrusions on the mirror housing 20, the degree of design freedom of the mirror housing 20 and further the degree of design freedom of the whole outer mirror can be advantageously improved.

Further, with a simple structure such that the plate member 40 closes the opening 20a of the mirror housing 20, vibrations of the mirror member 31 due to generated wind W can be prevented. This leads to decreased number of construction parts and simple assembly of the outer mirror, and further to low-cost outer mirror.

Because the plate member 40 is translucent, even if the opening 20a of the mirror housing 20 is closed by the plate member 40, visibility of the mirror member 31 does not deteriorate. Further, the mirror member 31 is protected by the plate member 40 so that rainwater, etc. does not directly hit the mirror surface 31a, thereby preventing the mirror member 31 from being soiled. This can permanently retain good visibility of the mirror member 31.

Further, because the plate member 40 closes the opening 20a of the mirror housing 20, the plate member 40 also functions as a reinforcement member at the opening 20a. This leads to an improvement in rigidity of the mirror housing 20.

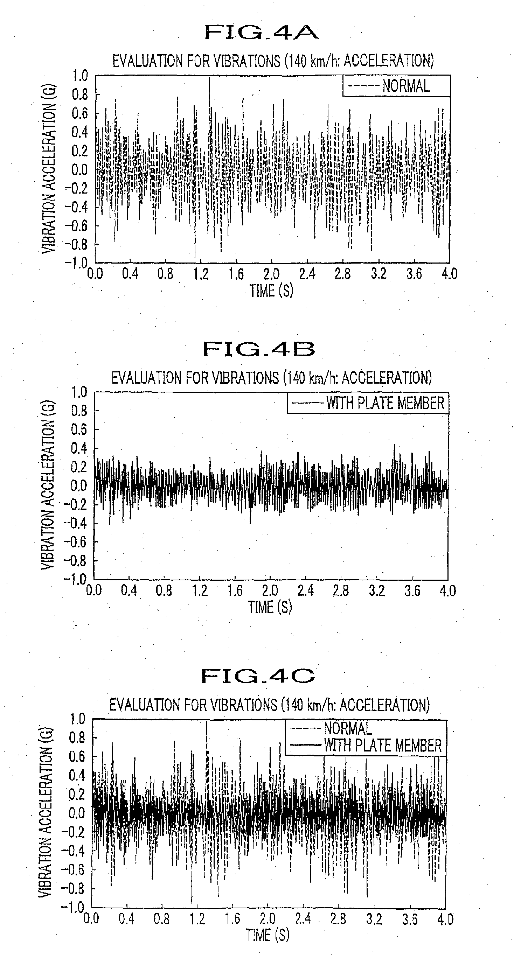

Evaluation tests for vibrations were carried out for the outer mirrors with and without the plate member 40 attached to the mirror housing 20. The results are shown in FIGS. 4A through 4C.

FIG. 4A is a graph showing the relation between time and vibration acceleration in the (normal) state where the plate member 40 is not attached to the mirror housing 20, and FIG. 4B is a graph showing the relation between time and vibration acceleration in the state where the opening 20a is closed by the plate member 40. FIG. 4C is a graph obtained by superposing respective values of FIGS. 4A and 4B.

As clearly seen in FIG. 4B, in the outer mirror with the plate member 40 according to the present invention, vibrations are reduced advantageously when compared with the outer mirror in the normal state such as shown in FIG. 4A, and the prevention of vibrations can be improved. As shown in FIG. 4C, when superposing FIGS. 4A and 4B, difference is clearly highlighted. Conditions of measurement were the same in both cases, and the above difference is merely based on the structure whether or not the plate member 40 closes the opening 20a of the mirror housing 20. Accordingly, the reason why the vibration decreasing characteristic as above can be obtained in the above preferred embodiment is because the vibrations of the mirror member 31 derived from generated wind W (FIG. 1B) can be decreased.

### SECOND EMBODIMENT

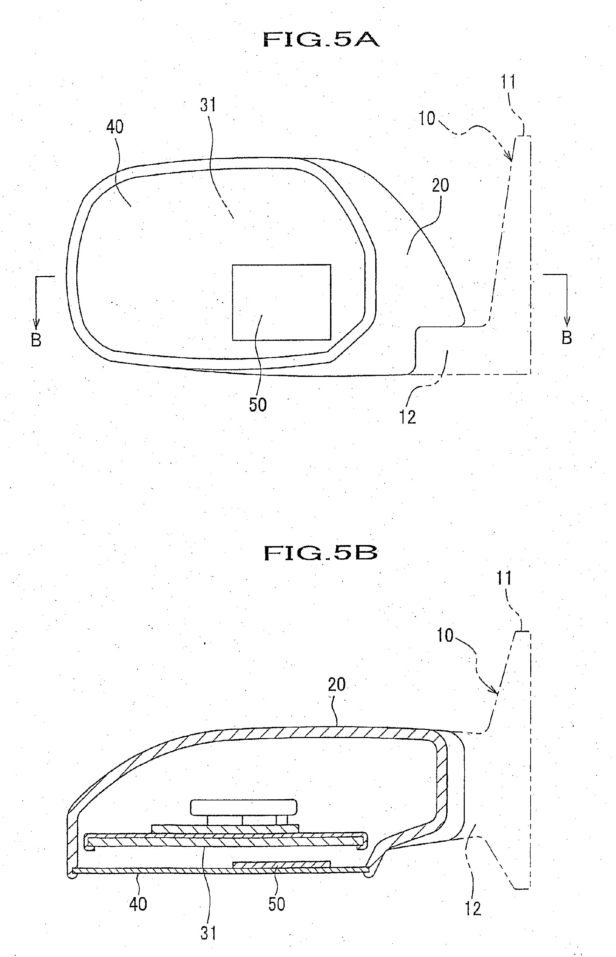

As seen in FIGS. 5A and 5B, the outer mirror according to this preferred embodiment is substantially the same as that of the first embodiment except that a monitor 50 is provided at the front side of the plate member 40 (opposite surface of the mirror member 31) as information displaying means.

In this preferred embodiment, a transparent thin film electro luminescence (EL) panel is employed as the monitor 50. The EL panel is prepared, for example, by the following process. Firstly, a transparent conductive layer consisting of ITO (indium tin oxide) is formed on the surface of a glass plate, etc. as a substrate, followed by photo-etching to form parallel strip-like transparent electrodes, and thereafter a lower insulating layer, a light emitting layer, and an upper insulating layer having a film are formed by electron beam evaporation method or sputtering method. A metallic film is then formed by electron beam evaporation method, and by means of photo-etching strip-like back-side electrodes and terminal electrodes are formed. The transparent thin film EL panel is formed accordingly. In this figure, wire harness for the EL panel is omitted. The EL panel may be prepared by other methods.

Various pieces of information such as indicated by characters, symbols, patterns, pictures, etc. can be displayed on the monitor 50. Control of the display can be carried out by a controller (not shown) arranged at the driver seat. For indicating the turning direction such as right turn or left turn, for example, arrow patterns (not shown) or characters (not shown) may be displayed as the display information. In this preferred embodiment, because the monitor 50 is arranged close to the vehicle body (not shown), the monitor 50 may be used for displaying information for the interior of the vehicle. In this instance, information generally displayed around the driver seat, such as vehicle speed, travel distance, temperature, remaining amount of fuel, fuel economy, outside temperature, temperature in the vehicle, setting temperature of the air conditioning system, etc. can be selectively displayed on the monitor 50.

In the display controller, various pieces of information which can be displayed on the monitor 50, such as characters, symbols, patterns, pictures, etc. are stored in a memory and the like, and according to the driver's preference or frequency of usage they can be deleted or added, for example, by replacement of the memory. Further, in the future, the information can be rewritten or added by the delivery service using a mobile or portable phone.

### THIRD EMBODIMENT

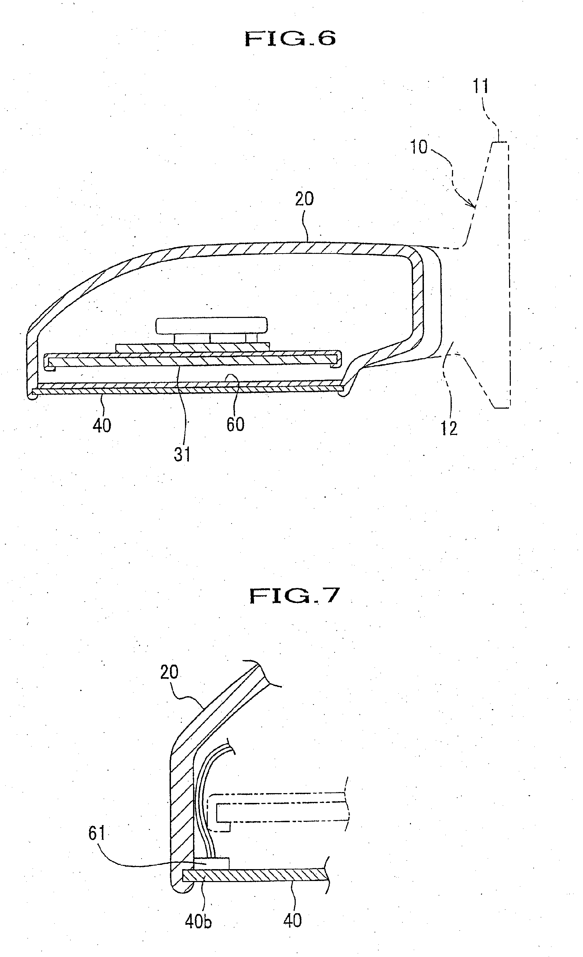

As shown in FIG. 6, the outer mirror according to this preferred embodiment is substantially the same as the first and second embodiments except that a heater 60 for preventing dew condensation is provided at the front surface (opposite surface of the mirror member 31).

The heater 60 substantially covers the entire front surface of the plate member 40. The heater 60 is formed by transparent electrodes which does not prevent light transmitting characteristics of the plate member 40. Temperature of the plate member 40 can be increased by applying electric voltage to the heater 60. Therefore, even if fog or dew condensation occurs at the front surface (heater surface because the heater 60 is positioned in the front surface of the plate member 40) or at the rear surface, it can be removed by the heater 60.

The heater 60 for preventing dew condensation is not limited to this specific construction. As shown in FIG. 7, the heater 60 may be provided at the periphery 40b of the plate member 40 such that a small-sized heater 61 partly or wholly surrounds the plate member 40.

While the present invention has been described in detail with reference to specific embodiments thereof, it is to be understood that various changes and modifications may be made without departing from the scope of the claims.

## Claims

1. An outer mirror comprising:
a mirror base (10) which, in use, laterally extends from a side surface of a vehicle body;
a mirror housing (20) having an opening (20a) and attached to the mirror base;
a mirror member (31) arranged in the opening of the mirror housing with a mirror surface (31a) tiltable relative to the mirror housing; and
a plate member (40) which is translucent and which covers the opening of the mirror housing at a rear side of the mirror member.

2. An outer mirror according to claim 1, wherein the plate member is made of plastic material.

3. An outer mirror according to claim 1 or 2, wherein the plate member is provided with an electrochromic layer (41) including an electrochromic element for changing its light transmittance.

4. An outer mirror according to claim 1, 2 or 3, wherein the plate member is provided with information displaying means (50).

5. An outer mirror according to any one of claims 1 to 4, wherein the plate member is provided with a heater (60) for preventing dew condensation.
